# EUROPEAN PATENT APPLICATION

(11) **EP 3 386 255 A1**
(43) Date of publication of application: **10.10.2018**
(21) Application number: 16880574.5
(22) Date of filing: 29.07.2016
(51) Int. Cl.: H04W 72/04

(54) **METHOD AND DEVICE FOR SENDING CONTROL SIGNAL**

(30) Priority: 30.12.2015 CN 201511025909
(71) Applicant: Huawei Technologies Co., Ltd., Longgang District Shenzhen, Guangdong 518129 (CN)
(72) Inventor: CHEN, Lei, Shenzhen, Guangdong 518129 (CN); LIU, Yalin, Shenzhen, Guangdong 518129 (CN); XIE, Yong, Shenzhen, Guangdong 518129 (CN)
(74) Representative: Pfenning, Meinig & Partner mbB
(86) International application number: PCT/CN2016/092253
(87) International publication number: WO 2017/113779

(57) **Abstract**

The present invention relates to the field of communications technologies, and discloses a control signal sending method and apparatus. The method includes: when time-frequency resources are divided into m subbands and one common control channel or n dedicated control channels, selecting a subband from the m subbands, and selecting a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and sending service data of a terminal by using the selected subband, and sending a control signal corresponding to the service data by using the selected control channel. The apparatus includes: a processing unit and a sending unit. According to the present invention, a control channel can be effectively configured on time-frequency resources, thereby improving utilization of the time-frequency resources.

## Description

This application claims priority to Chinese Patent Application No. 201511025909.3, filed with the Chinese Patent Office on December 30, 2015 and entitled "CONTROL SIGNAL SENDING METHOD AND APPARATUS", which is incorporated herein by reference in its entirety.

### TECHNICAL FIELD

Embodiments of the present invention relate to the field of communications technologies, and in particular, to a control signal sending method and apparatus.

### BACKGROUND

In a current communications system, to ensure stability of data transmission, after receiving downlink data sent by a base station, a terminal usually sends an uplink control signal to the base station based on the downlink data, and the uplink control signal may be: an acknowledgement (Acknowledgement, ACK)/negative acknowledgment (Negative Acknowledgment, NACK) feedback, a channel quality indicator (Channel Quality Indication, CQI) feedback, a resource scheduling request, or the like.

In a Long Term Evolution (Long Term Emission, LTE) network, an uplink control channel is set on a carrier, and when sending an uplink control signal to a base station, a terminal sends the uplink control signal directly on the uplink control channel on the carrier. However, in a future 5th generation mobile communications technology (5rd Generation, 5G) system, to better support different services, one carrier may be divided into a plurality of subbands. Therefore, how to send an uplink control signal on a carrier is a problem that urgently needs to be resolved.

### SUMMARY

To resolve the problem in the prior art, embodiments of the present invention provide a control signal sending method and apparatus. Technical solutions are as follows:

According to a first aspect, an embodimens of the present invention provides a control signal sending method, where the method includes:
when time-frequency resources are divided into m subbands and one common control channel or n dedicated control channels, selecting a subband from the m subbands, and selecting a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
sending service data of a terminal by using the selected subband, and sending a control signal corresponding to the service data by using the selected control channel.

According to the control signal sending method provided in the embodiment of the present invention, when time-frequency resources are divided into m subbands and one common control channel or n dedicated control channels, a subband is selected from the m subbands, and a control channel is selected from the common control channel or the n dedicated control channels; and service data of a terminal is sent by using the selected subband, and a control signal corresponding to the service data is sent by using the selected control channel, so that the control channel can be effectively configured on the time-frequency resources, thereby improving utilization of the time-frequency resources.

In a possible design, the m subbands respectively occupy downlink time-frequency resources, the n dedicated control channels occupy uplink time-frequency resources, and the m subbands correspond to the n dedicated control channels.

In a possible design, the m downlink subbands are bound to the n uplink dedicated control channels, so that complexity of allocating the dedicated control channels may be reduced.

In another possible design, a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

In another possible design, one downlink subband is bound to one or more uplink dedicated control channels, or a plurality of downlink subbands are bound to one uplink dedicated control channel, so that when a base station transmits uplink service data of the terminal on a downlink subband, the terminal transmits a control signal corresponding to the service data on an uplink dedicated control channel bound to the downlink subband. In this way, the base station does not need to allocate an uplink dedicated control channel to the terminal provisionally, thereby improving transmission efficiency of transmitting the control signal.

In another possible design, the uplink time-frequency resources include p uplink subbands, the n dedicated control channels are respectively located on n uplink subbands, one dedicated control channel is located on one uplink subband, and p is an integer greater than or equal to n.

In another possible design, n uplink subbands are selected from the p uplink subbands, and one uplink dedicated control channel is obtained by dividing each of the n uplink subbands. Therefore, uplink dedicated control channels may be obtained by dividing all uplink subbands, or uplink dedicated control channels may be obtained by dividing some uplink subbands, so that a transmission requirement of the terminal may be satisfied.

In another possible design, the m subbands respectively occupy downlink time-frequency resources, the common control channel occupies uplink time-frequency resources, and the m subbands correspond to the common control channel.

In another possible design, the downlink time-frequency resources are divided into m downlink subbands, the uplink time-frequency resources are divided into one uplink common control channel, and the m downlink subbands are bound to the uplink common control channel, so that load balancing of feedback resources of the downlink subbands may be facilitated.

In another possible design, the uplink time-frequency resources include n uplink subbands and the common control channel, and the n uplink subbands and the common control channel respectively occupy different time-frequency resources.

In another possible design, an uplink common control channel is inserted into a transmission timeslot of the uplink time-frequency resources, so that a transmission requirement of the terminal may be satisfied.

In another possible design, the uplink time-frequency resources include n uplink subbands and the common control channel, and the common control channel is located on one or more of the n uplink subbands.

In another possible design, an uplink common control channel may be obtained by dividing one uplink subband, or one uplink common control channel may be obtained by jointly dividing a plurality of uplink subbands, so that a transmission requirement of the terminal may be satisfied.

In another possible design, the m subbands and the common control channel respectively occupy different downlink time-frequency resources, and the m subbands correspond to the common control channel.

In another possible design, in a communications system whose transmission mode is a TDD mode, an uplink transmission timeslot and a downlink transmission timeslot alternately occur. To reduce a feedback delay, an uplink common control channel may be inserted into a downlink transmission timeslot, and an uplink common control channel does not need to be inserted only when an uplink transmission timeslot occurs. In this way, an uplink control channel is decoupled from an uplink data channel, and the feedback delay is reduced.

In another possible design, the selecting a control channel from the common control channel or the n dedicated control channels includes:
selecting a control channel corresponding to the selected subband from the common control channel or the n dedicated control channels based on the selected subband.

In another possible design, when the base station transmits uplink service data of the terminal on a downlink subband, the terminal transmits a control signal corresponding to the service data on an uplink dedicated control channel bound to the downlink subband, so that the base station does not need to allocate an uplink dedicated control channel to the terminal provisionally, thereby improving transmission efficiency of transmitting the control signal.

In another possible design, the common control channel includes m common control sub-channels, one common control sub-channel corresponds to one subband, and the common control sub-channel occupies a same frequency resource as that occupied by the subband.

In another possible design, the uplink common control channel is divided into a plurality of uplink common control sub-channels, and a frequency resource occupied by one uplink common control sub-channel is the same as a frequency resource occupied by one downlink subband, so that when the base station transmits uplink service data of the terminal on a downlink subband, the terminal may send a control signal on an uplink common control sub-channel the same as a frequency resource of the downlink subband. In this way, the terminal does not need to support different frequency ranges on a downlink link and an uplink link, and implementation complexity of the terminal may be reduced.

In another possible design, the m subbands have different transmission time interval TTI configurations, the common control channel includes one or more multi-carrier symbols, and a subcarrier interval of the common control channel is the same as or different from subcarrier intervals of the m subbands.

In another possible design, different subbands may have different TTI configurations, and a subcarrier interval of the common control channel is the same as or different from subcarrier intervals of the m subbands, so that a requirement of the terminal may be satisfied.

In another possible design, the plurality of multi-carrier symbols occupy same or different time resources and frequency resources.

In another possible design, the plurality of multi-carrier symbols occupy same or different time resources and frequency resources, so that a requirement of the terminal may be satisfied.

According to a second aspect, an embodiment of the present invention provides a control signal sending apparatus, where the apparatus includes: a processing unit and a sending unit, where
the processing unit is configured to: when time-frequency resources are divided into m subbands and one common control channel or n dedicated control channels, select a subband from the m subbands, and select a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
the sending unit is configured to send service data of a terminal by using the selected subband, and send a control signal corresponding to the service data by using the selected control channel.

According to the control signal sending apparatus provided in the embodiment of the present invention, when time-frequency resources are divided into m subbands and one common control channel or n dedicated control channels, a subband is selected from the m subbands, and a control channel is selected from the common control channel or the n dedicated control channels; and service data of a terminal is sent by using the selected subband, and a control signal corresponding to the service data is sent by using the selected control channel, so that the control channel can be effectively configured on the time-frequency resources, thereby improving utilization of the time-frequency resources.

In a possible design, the m subbands respectively occupy downlink time-frequency resources, the n dedicated control channels occupy uplink time-frequency resources, and the m subbands correspond to the n dedicated control channels. In a possible design, the m downlink subbands are bound to the n uplink dedicated control channels, so that complexity of allocating the dedicated control channels may be reduced.

In another possible design, a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

In another possible design, one downlink subband is bound to one or more uplink dedicated control channels, or a plurality of downlink subbands are bound to one uplink dedicated control channel, so that when a base station transmits uplink service data of the terminal on a downlink subband, the terminal transmits a control signal corresponding to the service data on an uplink dedicated control channel bound to the downlink subband. In this way, the base station does not need to allocate an uplink dedicated control channel to the terminal provisionally, thereby improving transmission efficiency of transmitting the control signal.

In another possible design, the uplink time-frequency resources include p uplink subbands, the n dedicated control channels are respectively located on n uplink subbands, one dedicated control channel is located on one uplink subband, and p is an integer greater than or equal to n.

In another possible design, n uplink subbands are selected from the p uplink subbands, and one uplink dedicated control channel is obtained by dividing each of the n uplink subbands. Therefore, uplink dedicated control channels may be obtained by dividing all uplink subbands, or uplink dedicated control channels may be obtained by dividing some uplink subbands, so that a transmission requirement of the terminal may be satisfied.

In another possible design, the m subbands respectively occupy downlink time-frequency resources, the common control channel occupies uplink time-frequency resources, and the m subbands correspond to the common control channel.

In another possible design, the downlink time-frequency resources are divided into m downlink subbands, the uplink time-frequency resources are divided into one uplink common control channel, and the m downlink subbands are bound to the uplink common control channel, so that load balancing of feedback resources of the downlink subbands may be facilitated.

In another possible design, the uplink time-frequency resources include n uplink subbands and the common control channel, and the n uplink subbands and the common control channel respectively occupy different time-frequency resources.

In another possible design, an uplink common control channel is inserted into a transmission timeslot of the uplink time-frequency resources, so that a transmission requirement of the terminal may be satisfied.

In another possible design, the uplink time-frequency resources include n uplink subbands and the common control channel, and the common control channel is located on one or more of the n uplink subbands.

In another possible design, an uplink common control channel may be obtained by dividing one uplink subband, or one uplink common control channel may be obtained by jointly dividing a plurality of uplink subbands, so that a transmission requirement of the terminal may be satisfied.

In another possible design, the m subbands and the common control channel respectively occupy different downlink time-frequency resources, and the m subbands correspond to the common control channel.

In another possible design, in a communications system whose transmission mode is a TDD mode, an uplink transmission timeslot and a downlink transmission timeslot alternately occur. To reduce a feedback delay, an uplink common control channel may be inserted into a downlink transmission timeslot, and an uplink common control channel does not need to be inserted only when an uplink transmission timeslot occurs. In this way, an uplink control channel is decoupled from an uplink data channel, and the feedback delay is reduced.

In another possible design, the processing unit is further configured to select a control channel corresponding to the selected subband from the common control channel or the n dedicated control channels based on the selected subband.

In another possible design, when the base station transmits uplink service data of the terminal on a downlink subband, the terminal transmits a control signal corresponding to the service data on an uplink dedicated control channel bound to the downlink subband, so that the base station does not need to allocate an uplink dedicated control channel to the terminal provisionally, thereby improving transmission efficiency of transmitting the control signal.

In another possible design, the common control channel includes m common control sub-channels, one common control sub-channel corresponds to one subband, and the common control sub-channel occupies a same frequency resource as that occupied by the subband.

In another possible design, the uplink common control channel is divided into a plurality of uplink common control sub-channels, and a frequency resource occupied by one uplink common control sub-channel is the same as a frequency resource occupied by one downlink subband, so that when the base station transmits uplink service data of the terminal on a downlink subband, the terminal may send a control signal on an uplink common control sub-channel the same as a frequency resource of the downlink subband. In this way, the terminal does not need to support different frequency ranges on a downlink link and an uplink link.

In another possible design, the m subbands have different transmission time interval TTI configurations, the common control channel includes one or more multi-carrier symbols, and a subcarrier interval of the common control channel is the same as or different from subcarrier intervals of the m subbands.

In another possible design, different subbands may have different TTI configurations, and a subcarrier interval of the common control channel is the same as or different from subcarrier intervals of the m subbands, so that a requirement of the terminal may be satisfied.

In another possible design, the plurality of multi-carrier symbols occupy same or different time resources and frequency resources.

In another possible design, the plurality of multi-carrier symbols occupy same or different time resources and frequency resources, so that a requirement of the terminal may be satisfied.

According to a third aspect, an embodiment of the present invention provides a control signal sending apparatus, where the apparatus includes: a processor and a transmitter, where
the processor is configured to: when time-frequency resources are divided into m subbands and one common control channel or n dedicated control channels, select a subband from the m subbands, and select a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
the transmitter is configured to send service data of a terminal by using the selected subband, and send a control signal corresponding to the service data by using the selected control channel.

According to the control signal sending apparatus provided in the embodiment of the present invention, when time-frequency resources are divided into m subbands and one common control channel or n dedicated control channels, a subband is selected from the m subbands, and a control channel is selected from the common control channel or the n dedicated control channels; and service data of a terminal is sent by using the selected subband, and a control signal corresponding to the service data is sent by using the selected control channel, so that the control channel can be effectively configured on the time-frequency resources, thereby improving utilization of the time-frequency resources.

In a possible design, the m subbands respectively occupy downlink time-frequency resources, the n dedicated control channels occupy uplink time-frequency resources, and the m subbands correspond to the n dedicated control channels.

In a possible design, the m downlink subbands are bound to the n uplink dedicated control channels, so that complexity of allocating the dedicated control channels may be reduced.

In another possible design, a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

In another possible design, one downlink subband is bound to one or more uplink dedicated control channels, or a plurality of downlink subbands are bound to one uplink dedicated control channel, so that when a base station transmits uplink service data of the terminal on a downlink subband, the terminal transmits a control signal corresponding to the service data on an uplink dedicated control channel bound to the downlink subband. In this way, the base station does not need to allocate an uplink dedicated control channel to the terminal provisionally, thereby improving transmission efficiency of transmitting the control signal.

In another possible design, the uplink time-frequency resources include p uplink subbands, the n dedicated control channels are respectively located on n uplink subbands, one dedicated control channel is located on one uplink subband, and p is an integer greater than or equal to n.

In another possible design, n uplink subbands are selected from the p uplink subbands, and one uplink dedicated control channel is obtained by dividing each of the n uplink subbands. Therefore, uplink dedicated control channels may be obtained by dividing all uplink subbands, or uplink dedicated control channels may be obtained by dividing some uplink subbands, so that a transmission requirement of the terminal may be satisfied.

In another possible design, the m subbands respectively occupy downlink time-frequency resources, the common control channel occupies uplink time-frequency resources, and the m subbands correspond to the common control channel.

In another possible design, the downlink time-frequency resources are divided into m downlink subbands, the uplink time-frequency resources are divided into one uplink common control channel, and the m downlink subbands are bound to the uplink common control channel, so that load balancing of feedback resources of the downlink subbands may be facilitated.

In another possible design, the uplink time-frequency resources include n uplink subbands and the common control channel, and the n uplink subbands and the common control channel respectively occupy different time-frequency resources.

In another possible design, an uplink common control channel is inserted into a transmission timeslot of the uplink time-frequency resources, so that a transmission requirement of the terminal may be satisfied.

In another possible design, the uplink time-frequency resources include n uplink subbands and the common control channel, and the common control channel is located on one or more of the n uplink subbands.

In another possible design, an uplink common control channel may be obtained by dividing one uplink subband, or one uplink common control channel may be obtained by jointly dividing a plurality of uplink subbands, so that a transmission requirement of the terminal may be satisfied.

In another possible design, the m subbands and the common control channel respectively occupy different downlink time-frequency resources, and the m subbands correspond to the common control channel.

In another possible design, in a communications system whose transmission mode is a TDD mode, an uplink transmission timeslot and a downlink transmission timeslot alternately occur. To reduce a feedback delay, an uplink common control channel may be inserted into a downlink transmission timeslot, and an uplink common control channel does not need to be inserted only when an uplink transmission timeslot occurs. In this way, an uplink control channel is decoupled from an uplink data channel, and the feedback delay is reduced.

In another possible design, the processor is further configured to select a control channel corresponding to the selected subband from the common control channel or the n dedicated control channels based on the selected subband.

In another possible design, when the base station transmits uplink service data of the terminal on a downlink subband, the terminal transmits a control signal corresponding to the service data on an uplink dedicated control channel bound to the downlink subband, so that the base station does not need to allocate an uplink dedicated control channel to the terminal provisionally, thereby improving transmission efficiency of transmitting the control signal.

In another possible design, the common control channel includes m common control sub-channels, one common control sub-channel corresponds to one subband, and the common control sub-channel occupies a same frequency resource as that occupied by the subband.

In another possible design, the uplink common control channel is divided into a plurality of uplink common control sub-channels, and a frequency resource occupied by one uplink common control sub-channel is the same as a frequency resource occupied by one downlink subband, so that when the base station transmits uplink service data of the terminal on a downlink subband, the terminal may send a control signal on an uplink common control sub-channel the same as a frequency resource of the downlink subband. In this way, the terminal does not need to support different frequency ranges on a downlink link and an uplink link.

In another possible design, the m subbands have different transmission time interval TTI configurations, the common control channel includes one or more multi-carrier symbols, and a subcarrier interval of the common control channel is the same as or different from subcarrier intervals of the m subbands.

In another possible design, different subbands may have different TTI configurations, and a subcarrier interval of the common control channel is the same as or different from subcarrier intervals of the m subbands, so that a requirement of the terminal may be satisfied.

In another possible design, the plurality of multi-carrier symbols occupy same or different time resources and frequency resources.

In another possible design, the plurality of multi-carrier symbols occupy same or different time resources and frequency resources, so that a requirement of the terminal may be satisfied.

### BRIEF DESCRIPTION OF DRAWINGS

FIG. 1 is a schematic structural diagram of a control signal sending apparatus according to an embodiment of the present invention;
FIG. 2 is a flowchart of a control signal sending method according to an embodiment of the present invention;
FIG. 3-1 is a flowchart of a control signal sending method according to an embodiment of the present invention;
FIG. 3-2 is a schematic diagram of dividing downlink time-frequency resources according to an embodiment of the present invention;
FIG. 3-3 is a schematic diagram of dividing uplink time-frequency resources according to an embodiment of the present invention;

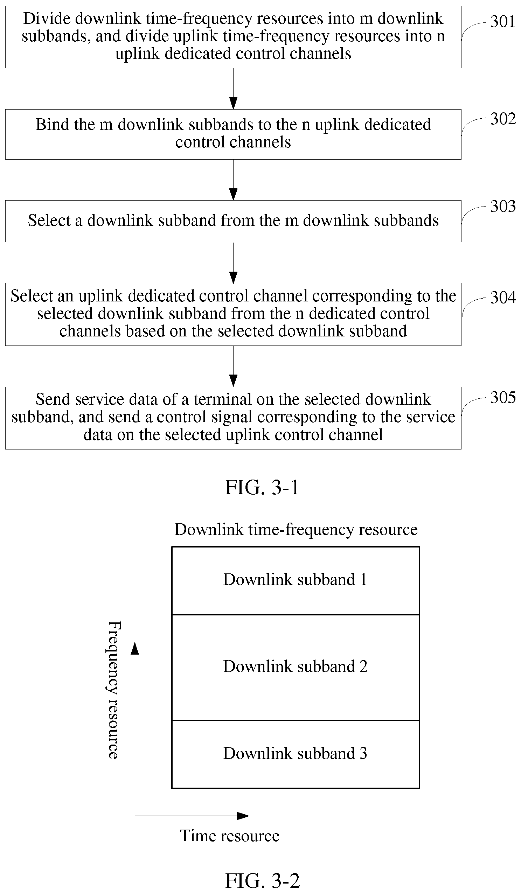

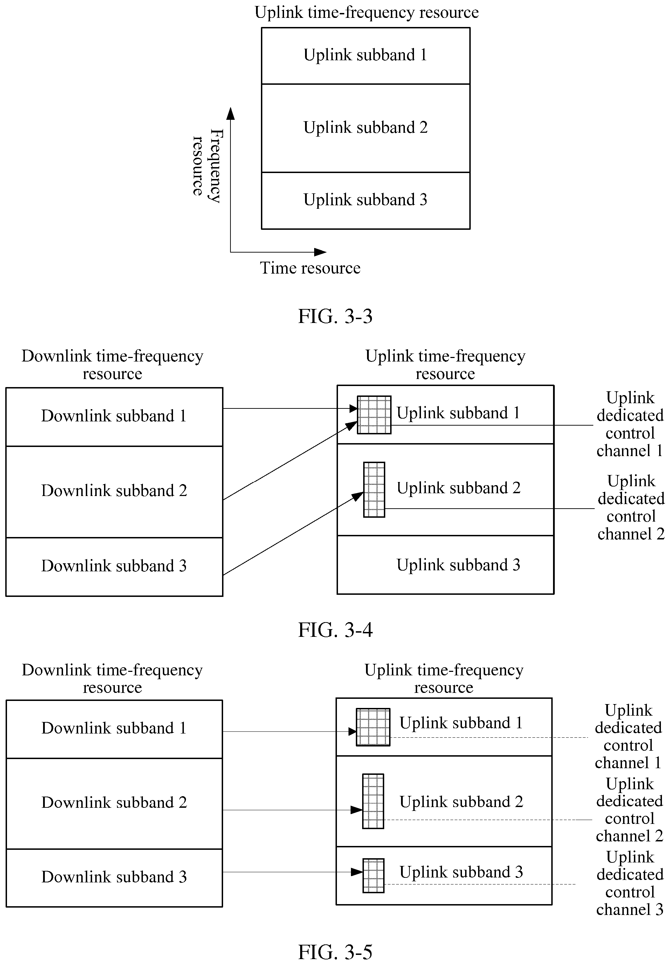

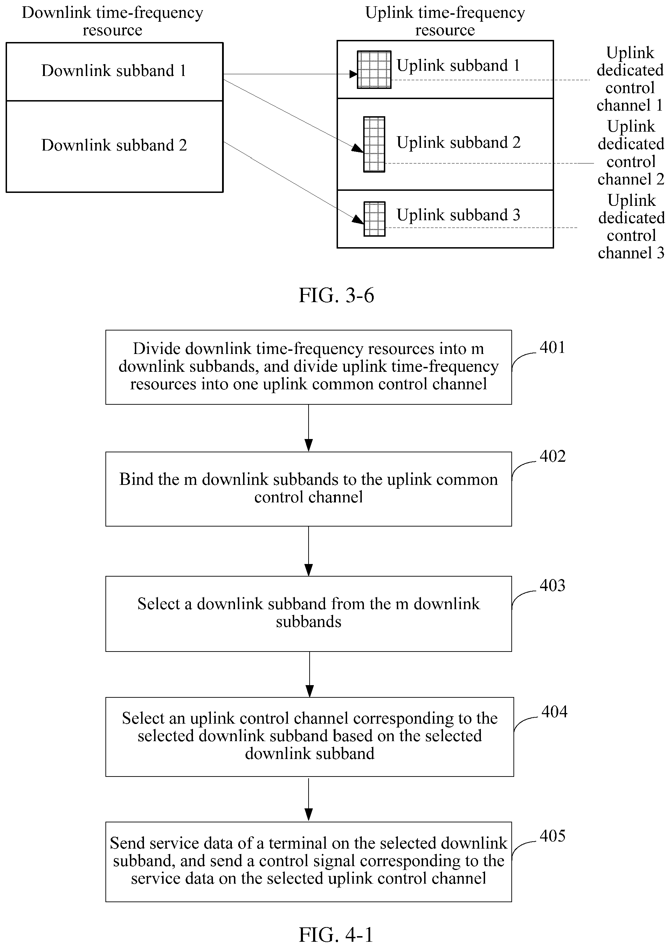

FIG. 3-4 is a schematic diagram of binding a downlink subband to an uplink dedicated control channel according to an embodiment of the present invention;
FIG. 3-5 is another schematic diagram of binding a downlink subband to an uplink dedicated control channel according to an embodiment of the present invention;
FIG. 3-6 is another schematic diagram of binding a downlink subband to an uplink dedicated control channel according to an embodiment of the present invention;

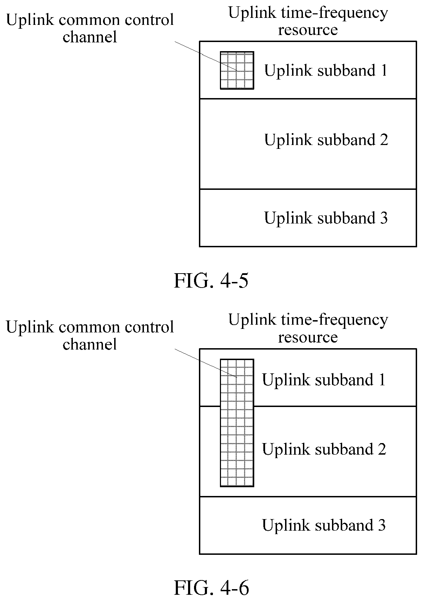

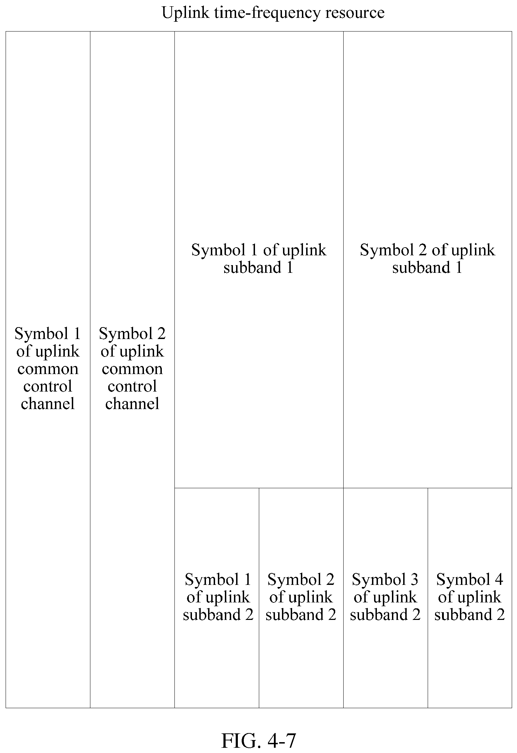

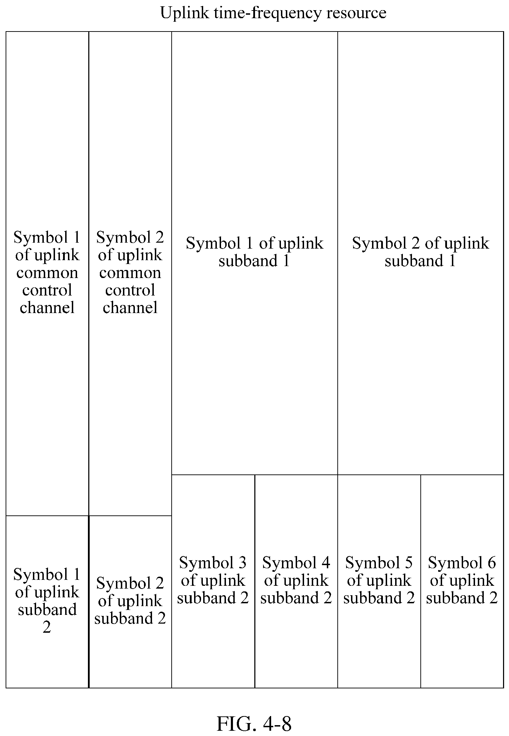

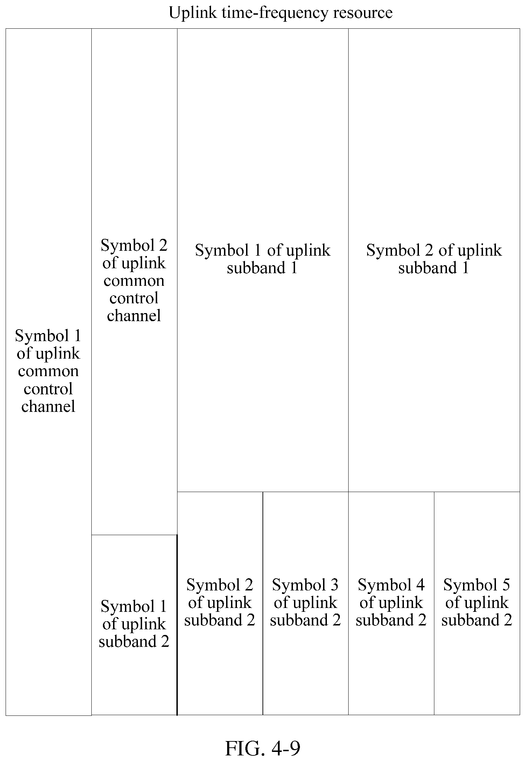

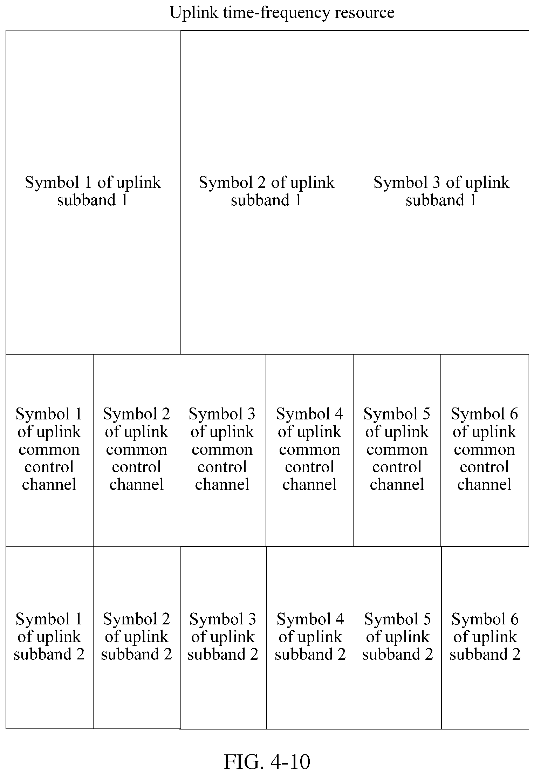

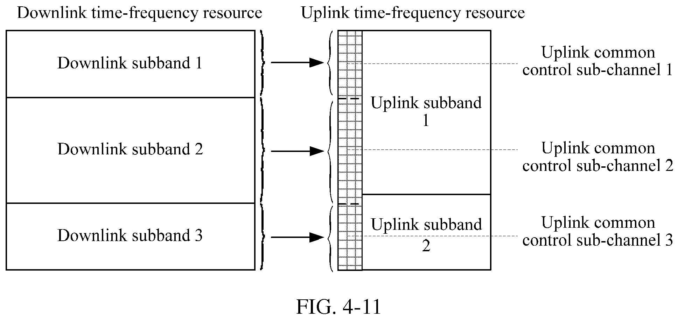

FIG. 4-1 is a flowchart of another control signal sending method according to an embodiment of the present invention;

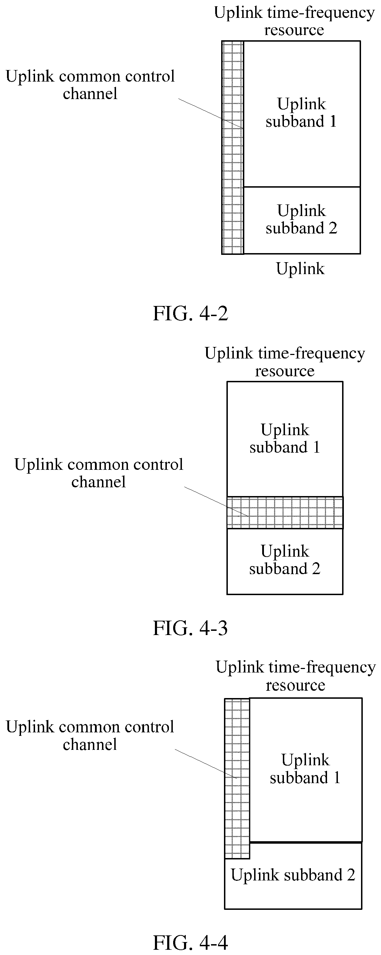

FIG. 4-2 is a schematic diagram of an uplink common control channel according to an embodiment of the present invention;
FIG. 4-3 is a schematic diagram of another uplink common control channel according to an embodiment of the present invention;
FIG. 4-4 is a schematic diagram of another uplink common control channel according to an embodiment of the present invention;
FIG. 4-5 is a schematic diagram of dividing an uplink common control channel on one uplink subband according to an embodiment of the present invention;
FIG. 4-6 is a schematic diagram of dividing an uplink common control channel on a plurality of uplink subbands according to an embodiment of the present invention;
FIG. 4-7 is a schematic diagram of an uplink common control channel according to an embodiment of the present invention;
FIG. 4-8 is a schematic diagram of another uplink common control channel according to an embodiment of the present invention;
FIG. 4-9 is a schematic diagram of another uplink common control channel according to an embodiment of the present invention;
FIG. 4-10 is a schematic diagram of another uplink common control channel according to an embodiment of the present invention;
FIG. 4-11 is a schematic diagram of binding a downlink subband to an uplink common control sub-channel according to an embodiment of the present invention;

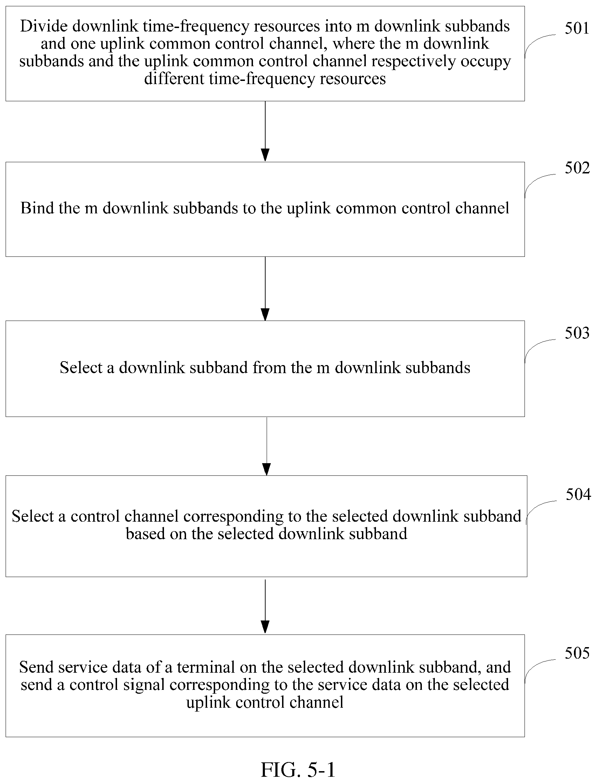

FIG. 5-1 is a flowchart of another control signal sending method according to an embodiment of the present invention;

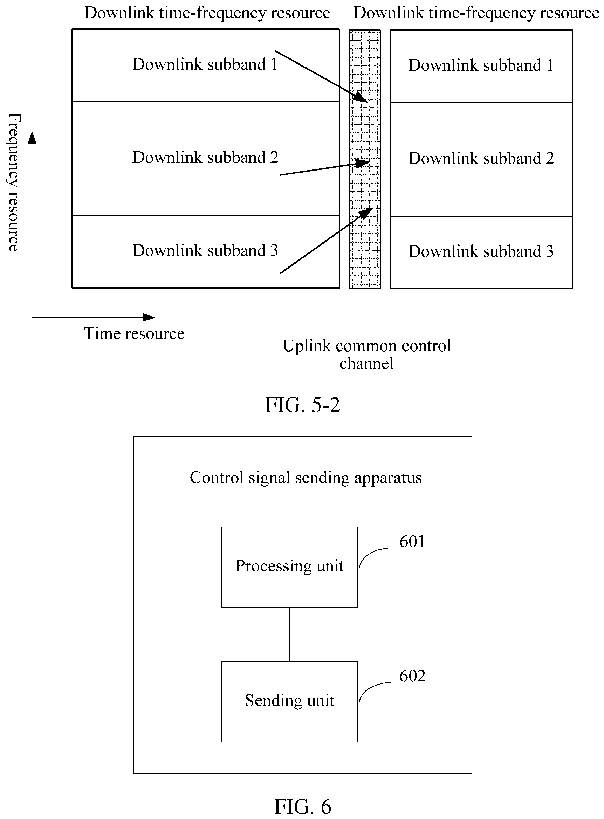

FIG. 5-2 is a schematic diagram of dividing an uplink common control channel on downlink time-frequency resources according to an embodiment of the present invention; and
FIG. 6 is a schematic structural diagram of another control signal sending apparatus according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

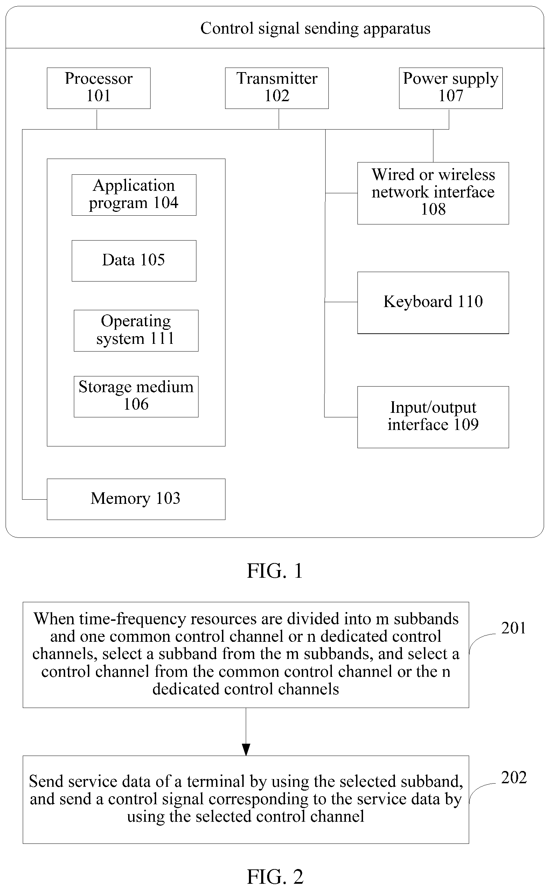

Referring to FIG. 1, FIG. 1 is a structural block diagram of a control signal sending apparatus according to an embodiment of the present invention. The control signal sending apparatus may change greatly due to a change in configuration or performance, and may include one or more processors 101, and one or more transmitters 102.

The processor 101 may be configured to perform the following operation: when time-frequency resources are divided into m subbands and one common control channel or n dedicated control channels, selecting a subband from the m subbands, and selecting a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2.

The transmitter 102 may be configured to perform the following operation: sending service data of a terminal by using the selected subband, and sending a control signal corresponding to the service data by using the selected control channel.

Optionally, in addition to the processor 101 and the transmitter 102, the control signal sending apparatus may further include other components. For example, the control signal sending apparatus may further include a memory 103, and one or more storage mediums 106 (for example, one or more massive storage devices) storing an application program 104 or data 105. The memory 103 and the storage medium 106 may perform transient storage or persistent storage. The program stored in the storage medium 106 may include one or more modules (not shown in the figure), and each module may include a series of instruction operations in the control signal sending apparatus. Furthermore, the processor 101 may be set to communicate with the storage medium 106, and perform the series of instruction operations in the storage medium 106 on the control signal sending apparatus.

The control signal sending apparatus may further include one or more power supplies 107, one or more wired or wireless network interfaces 108, one or more input/output interfaces 109, one or more keyboards 110, and/or one or more operating systems 111, for example, Windows ServerTM, Mac OS XTM, UnixTM, LinuxTM, and FreeBSDTM.

In the present invention, the processor 101 and the transmitter 102 that are included in the control signal sending apparatus may further have the following functions:
the processor 101 is configured to: when time-frequency resources are divided into m subbands and one common control channel or n dedicated control channels, select a subband from the m subbands, and select a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
the transmitter 102 is configured to send service data of a terminal by using the selected subband, and send a control signal corresponding to the service data by using the selected control channel.

Optionally, the m subbands respectively occupy downlink time-frequency resources, the n dedicated control channels occupy uplink time-frequency resources, and the m subbands correspond to the n dedicated control channels.

Optionally, a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

Optionally, the uplink time-frequency resources include p uplink subbands, the n dedicated control channels are respectively located on n uplink subbands, one dedicated control channel is located on one uplink subband, and p is an integer greater than or equal to n.

Optionally, the m subbands respectively occupy downlink time-frequency resources, the common control channel occupies uplink time-frequency resources, and the m subbands correspond to the common control channel.

Optionally, the uplink time-frequency resources include n uplink subbands and the common control channel, and the n uplink subbands and the common control channel respectively occupy different time-frequency resources.

Optionally, the uplink time-frequency resources include n uplink subbands and the common control channel, and the common control channel is located on one or more of the n uplink subbands.

Optionally, the m subbands and the common control channel respectively occupy different downlink time-frequency resources, and the m subbands correspond to the common control channel.

Optionally, the processor 101 is further configured to select a control channel corresponding to the selected subband from the common control channel or the n dedicated control channels based on the selected subband.

Optionally, the common control channel includes m common control sub-channels, one common control sub-channel corresponds to one subband, and the common control sub-channel occupies a same frequency resource as that occupied by the subband.

Optionally, the m subbands have different transmission time interval TTI configurations, the common control channel includes one or more multi-carrier symbols, and a subcarrier interval of the common control channel is the same as or different from subcarrier intervals of the m subbands.

Optionally, the plurality of multi-carrier symbols occupy same or different time resources and frequency resources.

In this embodiment of the present invention, when time-frequency resources are divided into m subbands and one common control channel or n dedicated control channels, a subband is selected from the m subbands, and a control channel is selected from the common control channel or the n dedicated control channels; and service data of a terminal is sent by using the selected subband, and a control signal corresponding to the service data is sent by using the selected control channel, so that the control channel can be effectively configured on the time-frequency resources, thereby improving utilization of the time-frequency resources.

Referring to FIG. 2, FIG. 2 is a flowchart of a control signal sending method according to an embodiment of the present invention. The method includes the following steps.

Step 201: When time-frequency resources are divided into m subbands and one common control channel or n dedicated control channels, select a subband from the m subbands, and select a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2.

Step 202: Send service data of a terminal by using the selected subband, and send a control signal corresponding to the service data by using the selected control channel.

In this embodiment of the present invention, when time-frequency resources are divided into m subbands and one common control channel or n dedicated control channels, a subband is selected from the m subbands, and a control channel is selected from the common control channel or the n dedicated control channels; and service data of a terminal is sent by using the selected subband, and a control signal corresponding to the service data is sent by using the selected dedicated control channel, so that the control channel can be effectively configured on the time-frequency resources, thereby improving utilization of the time-frequency resources.

Referring to FIG. 3-1, FIG. 3-1 is a flowchart of a control signal sending method according to an embodiment of the present invention. In this embodiment of the present invention, an example in which downlink time-frequency resources are divided into m downlink subbands and uplink time-frequency resources are divided into n uplink dedicated control channels is used for description. That is, in this embodiment of the present invention, the m subbands respectively occupy downlink time-frequency resources, the n dedicated control channels occupy uplink time-frequency resources, and the m subbands correspond to the n dedicated control channels.

The method may be performed by a base station, and the method includes the following steps.

Step 301: Divide downlink time-frequency resources into m downlink subbands, and divide uplink time-frequency resources into n uplink dedicated control channels.

The base station includes the uplink time-frequency resources and the downlink time-frequency resources. Uplink data is sent by using the uplink time-frequency resources, and downlink data is sent by using the downlink time-frequency resources. In a 5G network, to effectively configure time-frequency resources, uplink time-frequency resources and downlink time-frequency resources may be divided by using the following steps (1) and (2).

Step (1): Divide the downlink time-frequency resources into m downlink subbands, where m is an integer greater than or equal to 2.

The m downlink subbands are used to transmit downlink service data. The m downlink subbands respectively occupy same time resources and different frequency resources, and frequency band lengths corresponding to the frequency resources occupied by the downlink subbands may be the same or different.

For example, referring to FIG. 3-2, an example in which m=3 is used for description. The downlink time-frequency resources are divided into three downlink subbands: a downlink subband 1, a downlink subband 2, and a downlink subband 3. The downlink subband 1, the downlink subband 2, and the downlink subband 3 respectively occupy same time resources and different frequency resources.

Step (2): Divide the uplink time-frequency resources into n uplink dedicated control channels, where n is an integer greater than or equal to 2.

This step may be implemented by using the following steps (2-1) to (2-3).

Step (2-1): Divide the uplink time-frequency resources into p uplink subbands, where p is an integer greater than or equal to n.

The p uplink subbands are used to transmit uplink service data. The p uplink subbands respectively occupy same time resources and different frequency resources, and frequency band lengths corresponding to the frequency resources occupied by the uplink subbands may be the same or different.

For example, referring to FIG. 3-3, an example in which p=3 is used for description. The uplink time-frequency resources are divided into three uplink subbands: an uplink subband 1, an uplink subband 2, and an uplink subband 3.

Optionally, after the uplink time-frequency resources are divided into p uplink subbands, an uplink subband may be allocated to a terminal currently accessing the base station, and the terminal is bound to the uplink subband. In this way, the terminal may transmit uplink service data on the uplink subband allocated to the terminal.

Step (2-2): Select n uplink subbands from the p uplink subbands.

In this step, n uplink subbands are randomly selected from the p uplink subbands;
a quantity of terminals bound to each of the p uplink subbands is obtained, and n uplink subbands bound to a largest quantity of terminals are selected from the p uplink subbands; or
n uplink subbands occupying a largest quantity of frequency resources are selected from the p uplink subbands.

For example, an example in which n=2 is used for description, and the uplink subband 1 and the uplink subband 2 are selected from the uplink subband 1, the uplink subband 2, and the uplink subband 3.

Step (2-3): Obtain one uplink dedicated control channel by dividing each of the n uplink subbands, to obtain n uplink dedicated control channels.

Each of the n uplink dedicated control channels occupies some time resources and some frequency resources on an uplink subband on which the uplink dedicated control channel is located, that is, the n uplink dedicated control channels occupy some frequency resources and some time resources on the n uplink subbands.

For example, an uplink dedicated control channel 1 is obtained by dividing the uplink subband 1, and the uplink dedicated control channel 1 occupies some frequency resources and some time resources on the uplink subband 1; and an uplink dedicated control channel 2 is obtained by dividing the uplink subband 2, and the uplink dedicated control channel 2 occupies some frequency resources and some time resources on the uplink subband 2.

Optionally, in this embodiment of the present invention, the m downlink subbands may be bound to the p uplink subbands, so that when sending downlink service data on a downlink subband, the terminal may send uplink service data on an uplink subband bound to the downlink subband.

The step of binding the m downlink subbands to the p uplink subbands may be as follows:

When m is greater than n, a plurality of downlink subbands correspond to one uplink subband, that is, a plurality of downlink subbands of the m downlink subbands are bound to one of the p uplink subbands.

For example, the downlink subbands 1 and 2 are bound to the uplink subband 1. If downlink data of the terminal is scheduled onto the downlink subband 1 and/or the downlink subband 2, uplink data of the terminal is scheduled onto the uplink subband 1; or if uplink data of the terminal is scheduled onto the uplink subband 1, downlink data of the terminal is scheduled onto the downlink subband 1 and/or the downlink subband 2.

When m is equal to n, one downlink subband corresponds to one uplink subband, that is, one of the m downlink subbands is bound to one of the p uplink subbands.

For example, the downlink subband 1 is bound to the uplink subband 1. If downlink data of the terminal is scheduled onto the downlink subband 1, uplink data of the terminal is scheduled onto the uplink subband 1; or if uplink data of the terminal is scheduled onto the uplink subband 1, downlink data of the terminal is scheduled onto the downlink subband 1.

When m is less than n, one downlink subband corresponds to a plurality of uplink subbands, that is, one of the m downlink subbands is bound to a plurality of uplink subbands of the p uplink subbands.

For example, the downlink subband 1 is bound to the uplink subbands 1 and 2. If downlink data of the terminal is scheduled onto the downlink subband 1, uplink data of the terminal is scheduled onto the uplink subband 1 and/or the uplink subband 2; or if uplink data of the terminal is scheduled onto the uplink subband 1 and/or the uplink subband 2, downlink data of the terminal is scheduled onto the downlink subband 1.

Step 302: Bind the m downlink subbands to the n uplink dedicated control channels.

In this step, m>n, m=n, or m<n.

When m>n, a plurality of downlink subbands correspond to one uplink dedicated control channel, and this step may be as follows:

A plurality of downlink subbands of the m downlink subbands are bound to one of the n uplink dedicated control channels.

For example, referring to FIG. 3-4, an example in which m=3 and n=2 is used for description. Three downlink subbands are a downlink subband 1, a downlink subband 2, and a downlink subband 3; two uplink dedicated control channels are an uplink dedicated control channel 1 and an uplink dedicated control channel 2; and the downlink subbands 1 and 2 are separately bound to the uplink dedicated control channel 1, and the downlink subband 3 is bound to the uplink dedicated control channel 2.

When m=n, one downlink subband corresponds to one uplink dedicated control channel, and this step may be as follows:

One of the m downlink subbands is bound to one of the n uplink dedicated control channels.

For example, referring to FIG. 3-5, an example in which m=3 and n=3 is used for description. Three downlink subbands are a downlink subband 1, a downlink subband 2, and a downlink subband 3; three uplink dedicated control channels are an uplink dedicated control channel 1, an uplink dedicated control channel 2, and an uplink dedicated control channel 3; and the downlink subband 1 is bound to the uplink dedicated control channel 1, the downlink subband 2 is bound to the uplink dedicated control channel 2, and the downlink subband 3 is bound to the uplink dedicated control channel 3.

When m<n, one downlink subband corresponds to a plurality of uplink dedicated control channels, and this step may be as follows:

One of the m downlink subbands is bound to a plurality of uplink dedicated control channels of the n uplink dedicated control channels.

For example, referring to FIG. 3-6, an example in which m=2 and n=3 is used for description. Two downlink subbands are a downlink subband 1 and a downlink subband 2; three uplink dedicated control channels are an uplink dedicated control channel 1, an uplink dedicated control channel 2, and an uplink dedicated control channel 3; and the downlink subband 1 is separately bound to the uplink dedicated control channels 1 and 2, and the downlink subband 2 is bound to the uplink dedicated control channel 3.

It should be noted that, the m downlink subbands have different transmission time interval (Transmission Time Interval, TTI) configurations. The m uplink subbands have different TTI configurations.

It should be noted that, step 301 and step 302 need to be performed only once. When the terminal subsequently transmits service data and/or a control signal, step 301 or step 302 does not need to be performed, and only step 303 to step 305 need to be performed.

Step 303: Select a downlink subband from the m downlink subbands.

When the base station needs to transmit downlink service data to the terminal, the base station selects a downlink subband from the m downlink subbands. When selecting a downlink subband, the base station may randomly select a downlink subband; may select a downlink subband based on load information of each downlink subband, that is, by using the following first implementation; may select a downlink subband based on the service data, that is, by using the following second implementation and third implementation; or may select a downlink subband based on an identifier of the terminal, that is, by using the following fourth implementation.

In the first implementation, this step may be as follows:

Load information of each downlink subband is obtained, and a downlink subband whose load is the minimum is selected from the m downlink subbands based on the load information of each downlink subband.

The downlink subband whose load is the minimum is selected from the m downlink subbands, and service data is transmitted by using the selected downlink subband, so that a transmission speed may be improved.

In the second implementation, different service data corresponds to different load requirements, and this step may be as follows:

Load information of each downlink subband and a load requirement corresponding to the service data are obtained, and a downlink subband whose load information satisfies the load requirement is selected from the m downlink subbands based on the load information of each downlink subband.

In the third implementation, different service data corresponds to different frequency requirements, and this step may be as follows:

A frequency resource of each downlink subband and a frequency requirement corresponding to the service data are obtained, and a downlink subband whose frequency resource satisfies the frequency requirement is selected from the m downlink subbands based on the frequency resource of each downlink subband.

In the fourth implementation, the terminal is bound to a downlink subband in advance, and this step may be as follows:

The downlink subband bound to the terminal is selected from the m downlink subbands.

Step 304: Select an uplink dedicated control channel corresponding to the selected downlink subband from the n dedicated control channels based on the selected downlink subband.

The uplink dedicated control channel bound to the selected downlink subband is the uplink dedicated control channel corresponding to the selected downlink subband.

Step 305: Send service data of a terminal on the selected downlink subband, and send a control signal corresponding to the service data on the selected uplink control channel.

Service data of the terminal is scheduled onto the selected downlink subband, and the downlink subband onto which the service data is scheduled is sent to the terminal; and a notification message is sent to the terminal, and the notification message is used to instruct the terminal to schedule a control signal corresponding to the service data onto the bound uplink control channel.

The terminal receives the downlink subband onto which the service data is scheduled and the notification message that are sent by the base station, generates a control signal, schedules the control signal onto the bound uplink control channel based on the notification message, and sends the uplink control channel onto which the control signal is scheduled to the base station.

The control signal may be an ACK, a NACK, a CQI, a resource scheduling request, or the like.

It should be noted that, the control signal sending method provided in this embodiment of the present invention is applicable to a communications system whose transmission mode is a frequency division duplex (Frequency Division Dual, FDD) or time division duplex (Time Division Duplexing, TDD) mode.

In this embodiment of the present invention, downlink time-frequency resources are divided into m downlink subbands, uplink time-frequency resources are divided into n uplink dedicated control channels, a downlink subband is selected from the m downlink subbands, an uplink dedicated control channel is selected from the n uplink dedicated control channels, service data of a terminal is sent by using the selected subband, and a control signal corresponding to the service data is sent by using the selected uplink dedicated control channel, so that the control channel can be effectively configured on the time-frequency resources, thereby improving utilization of the time-frequency resources.

Referring to FIG. 4-1, FIG. 4-1 is a flowchart of a control signal sending method according to an embodiment of the present invention. In this embodiment of the present invention, an example in which downlink time-frequency resources are divided into m downlink subbands and uplink time-frequency resources are divided into one uplink common control channel is used for description. That is, in this embodiment of the present invention, the m subbands respectively occupy downlink time-frequency resources, the common control channel occupies uplink time-frequency resources, and the m subbands correspond to the common control channel.

The method may be performed by a base station, and the method includes the following steps.

Step 401: Divide downlink time-frequency resources into m downlink subbands, and divide uplink time-frequency resources into one uplink common control channel.

The step of dividing uplink time-frequency resources into one uplink common control channel may be implemented in the following first or second manner. In the first implementation, the step includes:
dividing the uplink time-frequency resources into n uplink subbands and one uplink common control channel.

In the first implementation, the uplink time-frequency resources include m uplink subbands and the common control channel, and the n uplink subbands and the uplink common control channel respectively occupy different time-frequency resources. Moreover, the uplink common control channel may occupy some time-frequency resources of the uplink time-frequency resources.

For example, referring to FIG. 4-2, the uplink common control channel occupies all frequency resources and some time resources that are included in the uplink time-frequency resources.

For another example, referring to FIG. 4-3, the uplink common control channel occupies all time resources and some frequency resources that are included in the uplink time-frequency resources.

For another example, referring to FIG. 4-4, the uplink common control channel occupies some time resources and some frequency resources that are included in the uplink time-frequency resources.

In the second implementation, the step of dividing uplink time-frequency resources into one uplink common control channel may be:
dividing the uplink time-frequency resources into n uplink subbands; and obtaining one uplink common control channel by dividing one or more of the n uplink subbands.

In the second implementation, the uplink time-frequency resources include n uplink subbands and the common control channel, the common control channel is located on one or more of the n uplink subbands, and the uplink common control channel occupies some time-frequency resources of the one or more uplink subbands.

For example, referring to FIG. 4-5, an example in which n is 3 is used for description. The uplink time-frequency resources are divided into three uplink subbands: an uplink subband 1, an uplink subband 2, and an uplink subband 3; the uplink subband 1 is selected from the uplink subband 1, the uplink subband 2, and the uplink subband 3, and one uplink common control channel is obtained by dividing the uplink subband 1.

For another example, referring to FIG. 4-6, uplink subbands 1 and 2 are selected from the uplink subband 1, the uplink subband 2, and an uplink subband 3, and one uplink common control channel is obtained by dividing the uplink subbands 1 and 2.

It should be noted that, the m uplink subbands have different TTI configurations, the common control channel includes one or more multi-carrier symbols, and a subcarrier interval of the common control channel is the same as or different from subcarrier intervals of the m subbands. Moreover, the plurality of multi-carrier symbols occupy same or different time resources and frequency resources.

The multi-carrier symbols include an OFDM symbol, a single-carrier frequency-division multiple access (Single-carrier Frequency-Division Multiple Access, SC-FDMA) symbol, a filter bank multi-carrier (Filter Bank Multi-Carrier, FBMC) symbol, and the like.

For example, referring to FIG. 4-7, the uplink common control channel occupies first two OFDM symbols of the uplink time-frequency resources, and occupies all frequency resources. A subcarrier interval 1 is used for the uplink common control channel, a subcarrier interval 2 is used for an uplink subband 1, and a subcarrier interval 3 is used for an uplink subband 2. The subcarrier interval 1, the subcarrier interval 2, and the subcarrier interval 3 are any value greater than 0.

For example, referring to FIG. 4-8, the uplink common control channel occupies first two OFDM symbols of the uplink time-frequency resources, and occupies some frequency resources and some time resources; and some frequency resources not occupied by the uplink common control channel are used as some symbols of an uplink subband 2.

For example, referring to FIG. 4-9, the uplink common control channel occupies first two OFDM symbols of the uplink time-frequency resources: an OFDM symbol 1 and an OFDM symbol 2; and the OFDM symbol 1 occupies all frequency resources and some time resources of the uplink time-frequency resources, the OFDM symbol 2 occupies some frequency resources and some time resources of the uplink time-frequency resources, and some frequency resources not occupied by the OFDM symbol 2 are used as some symbols of an uplink subband 2.

For example, referring to FIG. 4-10, the uplink common control channel occupies some frequency resources and all time resources of the uplink time-frequency resources.

Step 402: Bind the m downlink subbands to the uplink common control channel.

The m subbands correspond to the common control channel. If the uplink common control channel occupies all frequency resources and some time resources of the uplink time-frequency resources, the uplink common control channel may be divided into the m uplink common control sub-channels, one uplink common control sub-channel corresponds to one downlink subband, and a frequency resource of the uplink common control sub-channel is the same as a frequency resource of the downlink subband corresponding to the uplink common control sub-channel; and each downlink subband is bound to an uplink common control sub-channel corresponding to the downlink subband.

For example, referring to FIG. 4-11, an example in which m=3 is used for description. Three downlink subbands are a downlink subband 1, a downlink subband 2, and a downlink subband 3; the uplink common control channel is divided into three uplink common control sub-channels: an uplink common control sub-channel 1, an uplink common control sub-channel 1, and an uplink common control sub-channel 3, a frequency resource of the downlink subband 1 is the same as a frequency resource of the uplink common control sub-channel 1, a frequency resource of the downlink subband 2 is the same as a frequency resource of the uplink common control sub-channel 2, a frequency resource of the downlink subband 3 is the same as a frequency resource of the uplink common control sub-channel 3, the downlink subband 1 is bound to the uplink common control sub-channel 1, the downlink subband 2 is bound to the uplink common control sub-channel 2, and the downlink subband 3 is bound to the uplink common control sub-channel 3.

It should be noted that, step 401 and step 402 need to be performed only once. When the terminal subsequently transmits service data and/or a control signal, step 401 or step 402 does not need to be performed, and only step 403 to step 405 need to be performed.

Step 403: Select a downlink subband from the m downlink subbands.

For a specific selection process, refer to step 303. Details are not described herein again.

Step 404: Select an uplink control channel corresponding to the selected downlink subband based on the selected downlink subband.

If in step 402, the m downlink subbands are directly bound to the uplink common control channel, in this step, the uplink common control channel is the uplink control channel corresponding to the selected downlink subband.

If in step 402, each downlink subband is bound to an uplink common control sub-channel corresponding to the downlink subband, in this step, an uplink common control sub-channel corresponding to the selected downlink subband is selected from the m uplink common control sub-channels based on the selected downlink subband, that is, a common control sub-channel the same as a frequency resource of the selected downlink subband is selected from the m common control sub-channels.

Step 405: Send service data of a terminal on the selected downlink subband, and send a control signal corresponding to the service data on the selected uplink control channel.

If the selected uplink control channel is the uplink common control channel, in this step, the control signal corresponding to the service data is sent on the uplink common control channel; or if the selected uplink control channel is an uplink common control sub-channel the same as a frequency resource of the selected downlink subband, in this step, the control signal corresponding to the service data is sent on the selected uplink common control sub-channel.

It should be noted that, the control signal sending method provided in this embodiment of the present invention is applicable to a communications system whose transmission mode is an FDD or a TDD mode.

In this embodiment of the present invention, downlink time-frequency resources are divided into m downlink subbands, uplink time-frequency resources are divided into one uplink common control channel, a downlink subband is selected from the m downlink subbands, service data of a terminal is sent by using the selected downlink subband, and a control signal corresponding to the service data is sent by using the uplink common control channel, so that the control channel can be effectively configured on the time-frequency resources, thereby improving utilization of the time-frequency resources, and facilitating load balancing of feedback resources of the downlink subbands.

Referring to FIG. 5-1, FIG. 5-1 is a flowchart of a control signal sending method according to an embodiment of the present invention. In this embodiment of the present invention, an example in which downlink time-frequency resources are divided into m downlink subbands and one uplink common control channel is used for description. That is, in this embodiment of the present invention, the m subbands and the common control channel respectively occupy different downlink time-frequency resources, and the m subbands correspond to the common control channel.

The method may be performed by a base station, and the method includes the following steps.

Step 501: Divide downlink time-frequency resources into m downlink subbands and one uplink common control channel, where the m downlink subbands and the uplink common control channel respectively occupy different time-frequency resources.

In a communications system whose transmission mode is a TDD mode, an uplink transmission timeslot and a downlink transmission timeslot alternately occur. To reduce a feedback delay, an uplink common control channel may be inserted into a downlink transmission timeslot, and an uplink common control channel does not need to be inserted only when an uplink transmission timeslot occurs. In this way, an uplink control channel is decoupled from an uplink data channel, and the feedback delay is reduced.

The uplink common control channel occupies all frequency resources and some time resources of the downlink time-frequency resources. For example, referring to FIG. 5-2, a protection timeslot is reserved between the uplink common control channel and a downlink subband.

It should be noted that, the m downlink subbands have different TTI configurations, the common control channel includes one or more multi-carrier symbols, and a subcarrier interval of the common control channel is the same as or different from subcarrier intervals of the m subbands. Moreover, the plurality of multi-carrier symbols occupy same or different time resources and frequency resources.

Step 502: Bind the m downlink subbands to the uplink common control channel.

For a specific binding process, refer to step 402. Details are not described herein again.

It should be noted that, step 501 and step 502 need to be performed only once. When the terminal subsequently transmits service data and/or a control signal, step 501 or step 502 does not need to be performed, and only step 503 to step 505 need to be performed.

Step 503: Select a downlink subband from the m downlink subbands.

For a specific selection process, refer to step 303. Details are not described herein again.

Step 504: Select a control channel corresponding to the selected downlink subband based on the selected downlink subband.

For a specific selection process, refer to step 403. Details are not described herein again.

Step 505: Send service data of a terminal on the selected downlink subband, and send a control signal corresponding to the service data on the selected uplink control channel.

For a specific sending process, refer to step 405. Details are not described herein again.

In this embodiment of the present invention, downlink time-frequency resources are divided into m downlink subbands and one uplink common control channel, a downlink subband is selected from the m downlink subbands, service data of a terminal is sent by using the selected subband, and a control signal corresponding to the service data is sent by using the uplink common control channel, so that the control channel can be effectively configured on the time-frequency resources, thereby improving utilization of the time-frequency resources, and facilitating load balancing of feedback resources of the downlink subbands.

Referring to FIG. 6, an embodiment of the present invention provides a control signal sending apparatus. Referring to FIG. 6, the apparatus includes: a processing unit 601 and a sending unit 602, where
the processing unit 601 is configured to: when time-frequency resources are divided into m subbands and one common control channel or n dedicated control channels, select a subband from the m subbands, and select a control channel from the common control channel or the n dedicated control channels, where the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
the sending unit 602 is configured to send service data of a terminal by using the selected subband, and send a control signal corresponding to the service data by using the selected control channel.

Optionally, the m subbands respectively occupy downlink time-frequency resources, the n dedicated control channels occupy uplink time-frequency resources, and the m subbands correspond to the n dedicated control channels.

Optionally, a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

Optionally, the uplink time-frequency resources include p uplink subbands, the n dedicated control channels are respectively located on n uplink subbands, one dedicated control channel is located on one uplink subband, and p is an integer greater than or equal to n.

Optionally, the m subbands respectively occupy downlink time-frequency resources, the common control channel occupies uplink time-frequency resources, and the m subbands correspond to the common control channel.

Optionally, the uplink time-frequency resources include n uplink subbands and the common control channel, and the n uplink subbands and the common control channel respectively occupy different time-frequency resources.

Optionally, the uplink time-frequency resources include n uplink subbands and the common control channel, and the common control channel is located on one or more of the n uplink subbands.

Optionally, the m subbands and the common control channel respectively occupy different downlink time-frequency resources, and the m subbands correspond to the common control channel.

Optionally, the processing unit 601 is further configured to select a control channel corresponding to the selected subband from the common control channel or the n dedicated control channels based on the selected subband.

Optionally, the common control channel includes m common control sub-channels, one common control sub-channel corresponds to one subband, and the common control sub-channel occupies a same frequency resource as that occupied by the subband.

Optionally, the m subbands have different transmission time interval TTI configurations, the common control channel includes one or more multi-carrier symbols, and a subcarrier interval of the common control channel is the same as or different from subcarrier intervals of the m subbands.

Optionally, the plurality of multi-carrier symbols occupy same or different time resources and frequency resources.

In this embodiment of the present invention, when time-frequency resources are divided into m subbands and one common control channel or n dedicated control channels, a subband is selected from the m subbands, and a control channel is selected from the common control channel or the n dedicated control channels; and service data of a terminal is sent by using the selected subband, and a control signal corresponding to the service data is sent by using the selected control channel, so that the control channel can be effectively configured on the time-frequency resources, thereby improving utilization of the time-frequency resources.

It should be noted that when the control signal sending apparatus provided in this embodiment sends a control signal, description is performed only through examples of division of the functional modules. During actual application, the foregoing functions may be allocated, based on a requirement, to different functional modules for implementation, that is, the internal structure of the apparatus is divided into different functional modules, to implement all or some of the functions described above. Furthermore, the embodiment of the control signal sending apparatus provided in the foregoing embodiments belongs to the same idea as that of the embodiment of the control signal sending method. For details of a specific implementation process of the apparatus embodiment, refer to the method embodiment. Details are not described herein again.

A person of ordinary skill in the art may understand that all or some of the steps of the foregoing embodiments may be implemented by hardware or a program instructing related hardware. The program may be stored in a computer-readable storage medium. The storage medium may include: a read-only memory, a magnetic disk, or an optical disc, or the like.

The foregoing descriptions are merely examples of embodiments of the present invention, but are not intended to limit the present invention. Any modification, equivalent replacement, and improvement made without departing from the spirit and principle of the present invention shall fall within the protection scope of the present invention.

## Claims

1. A control signal sending method, wherein the method comprises:
when time-frequency resources are divided into m subbands and one common control channel or n dedicated control channels, selecting a subband from the m subbands, and selecting a control channel from the common control channel or the n dedicated control channels, wherein the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
sending service data of a terminal by using the selected subband, and sending a control signal corresponding to the service data by using the selected control channel.

2. The method according to claim 1, wherein the m subbands respectively occupy downlink time-frequency resources, the n dedicated control channels occupy uplink time-frequency resources, and the m subbands correspond to the n dedicated control channels.

3. The method according to claim 2, wherein a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

4. The method according to claim 2, wherein the uplink time-frequency resources comprise p uplink subbands, the n dedicated control channels are respectively located on n uplink subbands, one dedicated control channel is located on one uplink subband, and p is an integer greater than or equal to n.

5. The method according to claim 1, wherein the m subbands respectively occupy downlink time-frequency resources, the common control channel occupies uplink time-frequency resources, and the m subbands correspond to the common control channel.

6. The method according to claim 5, wherein the uplink time-frequency resources comprise n uplink subbands and the common control channel, and the n uplink subbands and the common control channel respectively occupy different time-frequency resources.

7. The method according to claim 5, wherein the uplink time-frequency resources comprise n uplink subbands and the common control channel, and the common control channel is located on one or more of the n uplink subbands.

8. The method according to claim 1, wherein the m subbands and the common control channel respectively occupy different downlink time-frequency resources, and the m subbands correspond to the common control channel.

9. The method according to claim 1, wherein the selecting a control channel from the common control channel or the n dedicated control channels comprises:
selecting a control channel corresponding to the selected subband from the common control channel or the n dedicated control channels based on the selected subband.

10. The method according to claim 5, wherein the common control channel comprises m common control sub-channels, one common control sub-channel corresponds to one subband, and the common control sub-channel occupies a same frequency resource as that occupied by the subband.

11. The method according to claim 1, wherein the m subbands have different transmission time interval TTI configurations, the common control channel comprises one or more multi-carrier symbols, and a subcarrier interval of the common control channel is the same as or different from subcarrier intervals of the m subbands.

12. The method according to claim 11, wherein the plurality of multi-carrier symbols occupy same or different time resources and frequency resources.

13. A control signal sending apparatus, wherein the apparatus comprises: a processing unit and a sending unit, wherein
the processing unit is configured to: when time-frequency resources are divided into m subbands and one common control channel or n dedicated control channels, select a subband from the m subbands, and select a control channel from the common control channel or the n dedicated control channels, wherein the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
the sending unit is configured to send service data of a terminal by using the selected subband, and send a control signal corresponding to the service data by using the selected control channel.

14. The apparatus according to claim 13, wherein
the m subbands respectively occupy downlink time-frequency resources, the n dedicated control channels occupy uplink time-frequency resources, and the m subbands correspond to the n dedicated control channels.

15. The apparatus according to claim 14, wherein
a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

16. The apparatus according to claim 14, wherein
the uplink time-frequency resources comprise p uplink subbands, the n dedicated control channels are respectively located on n uplink subbands, one dedicated control channel is located on one uplink subband, and p is an integer greater than or equal to n.

17. The apparatus according to claim 13, wherein
the m subbands respectively occupy downlink time-frequency resources, the common control channel occupies uplink time-frequency resources, and the m subbands correspond to the common control channel.

18. The apparatus according to claim 17, wherein
the uplink time-frequency resources comprise n uplink subbands and the common control channel, and the n uplink subbands and the common control channel respectively occupy different time-frequency resources.

19. The apparatus according to claim 17, wherein
the uplink time-frequency resources comprise n uplink subbands and the common control channel, and the common control channel is located on one or more of the n uplink subbands.

20. The apparatus according to claim 13, wherein
the m subbands and the common control channel respectively occupy different downlink time-frequency resources, and the m subbands correspond to the common control channel.

21. The apparatus according to claim 13, wherein
the processing unit is further configured to select a control channel corresponding to the selected subband from the common control channel or the n dedicated control channels based on the selected subband.

22. The apparatus according to claim 17, wherein
the common control channel comprises m common control sub-channels, one common control sub-channel corresponds to one subband, and the common control sub-channel occupies a same frequency resource as that occupied by the subband.

23. The apparatus according to claim 13, wherein the m subbands have different transmission time interval TTI configurations, the common control channel comprises one or more multi-carrier symbols, and a subcarrier interval of the common control channel is the same as or different from subcarrier intervals of the m subbands.

24. The apparatus according to claim 23, wherein the plurality of multi-carrier symbols occupy same or different time resources and frequency resources.

25. A control signal sending apparatus, wherein the apparatus comprises: a processor and a transmitter, wherein
the processor is configured to: when time-frequency resources are divided into m subbands and one common control channel or n dedicated control channels, select a subband from the m subbands, and select a control channel from the common control channel or the n dedicated control channels, wherein the m subbands respectively occupy different frequency resources, the common control channel or the n dedicated control channels respectively occupy frequency resources and/or time resources different from those occupied by the m subbands, m is an integer greater than or equal to 2, and n is an integer greater than or equal to 2; and
the transmitter is configured to send service data of a terminal by using the selected subband, and send a control signal corresponding to the service data by using the selected control channel.

26. The apparatus according to claim 25, wherein
the m subbands respectively occupy downlink time-frequency resources, the n dedicated control channels occupy uplink time-frequency resources, and the m subbands correspond to the n dedicated control channels.

27. The apparatus according to claim 26, wherein
a plurality of subbands of the m subbands correspond to one of the n dedicated control channels, one of the m subbands corresponds to one of the n dedicated control channels, or one of the m subbands corresponds to a plurality of dedicated control channels of the n dedicated control channels.

28. The apparatus according to claim 26, wherein
the uplink time-frequency resources comprise p uplink subbands, the n dedicated control channels are respectively located on n uplink subbands, one dedicated control channel is located on one uplink subband, and p is an integer greater than or equal to n.

29. The apparatus according to claim 25, wherein
the m subbands respectively occupy downlink time-frequency resources, the common control channel occupies uplink time-frequency resources, and the m subbands correspond to the common control channel.

30. The apparatus according to claim 29, wherein
the uplink time-frequency resources comprise n uplink subbands and the common control channel, and the n uplink subbands and the common control channel respectively occupy different time-frequency resources.

31. The apparatus according to claim 29, wherein
the uplink time-frequency resources comprise n uplink subbands and the common control channel, and the common control channel is located on one or more of the n uplink subbands.

32. The apparatus according to claim 25, wherein
the m subbands and the common control channel respectively occupy different downlink time-frequency resources, and the m subbands correspond to the common control channel.

33. The apparatus according to claim 25, wherein
the processor is further configured to select a control channel corresponding to the selected subband from the common control channel or the n dedicated control channels based on the selected subband.

34. The apparatus according to claim 29, wherein the common control channel comprises m common control sub-channels, one common control sub-channel corresponds to one subband, and the common control sub-channel occupies a same frequency resource as that occupied by the subband.

35. The apparatus according to claim 25, wherein the m subbands have different transmission time interval TTI configurations, the common control channel comprises one or more multi-carrier symbols, and a subcarrier interval of the common control channel is the same as or different from subcarrier intervals of the m subbands.

36. The apparatus according to claim 35, wherein the plurality of multi-carrier symbols occupy same or different time resources and frequency resources.
